# EUROPEAN PATENT APPLICATION

(11) **EP 2 055 671 A1**
(43) Date of publication of application: **06.05.2009**
(21) Application number: 07791797.9
(22) Date of filing: 26.07.2007
(51) Int. Cl.: C01B 25/42, H01B 1/06, H01M 8/02, H01M 8/10

(54) **METAL PHOSPHATE**

(30) Priority: 28.07.2006 JP 2006205874
(71) Applicant: Sumitomo Chemical Company, Limited, Tokyo 104-8260 (JP)
(72) Inventor: HIBINO, Takashi, Seto-shi, Aichi4890918 (JP); TANAKA, Toshihiko, Inashiki-gun, Ibaraki 3000331 (JP); HATTORI, Takeshi, Abiko-shi, Chiba 2701175 (JP)
(74) Representative: Duckworth, Timothy John
(86) International application number: PCT/JP2007/065117
(87) International publication number: WO 2008/013317

(57) **Abstract**

Provided is a metal phosphate showing high proton conductivity, which is useful for a fuel cell having higher output and produced at lower cost. The proton-conductive metal phosphate is a compound containing M, P and O,
wherein M represents at least one selected from the group consisting of group 4A and group 4B elements in the long form of the periodic table,
a part of M is substituted with a dopant element J
J represents at least one selected from the group consisting of group 3A, group 3B, group 5A and group 5B elements in the long form of the periodic table and at least contains an element selected from B, Al, Ga, Sc, Yb, Y, La, Ce, Sb, Bi, V, Ta and Nb.

## Description

### TECHNICAL FIELD

The present invention relates to a metal phosphate. More specifically, the present invention relates to a proton-conductive metal phosphate used as a solid electrolyte for fuel cells.

### BACKGROUND ART

Metal phosphates are known to have proton conductivity, and used as a solid electrolyte in fuel cells. Known as the solid electrolyte are polymers, phosphoric acid, molten salts and solid oxides, and fuel cells using them are investigated. Of these solid electrolytes, solid polymer type fuel cells using polymers (PEFC: Polymer Electrolyte Fuel Cell) are operable at low temperatures of from room temperature to about 100°C, easily formed into film and receive little influence by carbon dioxide, thus, said to be suitable for portable electric sources or small size stationary electric sources, among these solid electrolytes. However, since solid polymer type fuel cells are operated at low temperatures, a large amount of platinum is necessary as a catalyst, generating interference against popularization thereof from the standpoint of securing of resources and cost. In contrast, solid oxide fuel cells using a solid oxide such as zirconia or the like as a solid electrolyte (SOFC: Solid Oxide Fuel Cell) are operated at high temperatures of about 900 to 1000°C, thus, there is no necessity of use of platinum as a catalyst, catalyst poisoning is solved and high output is expected. Such solid oxide fuel cells are said to be suitable for large scale stationary electric sources because of necessity of high operation temperatures, among these solid electrolytes.

Under such conditions, metal phosphates have proton conductivity at temperatures (low to middle temperatures) lower than the operation temperature of zirconia though the metal phosphates are solid oxides, and provide a possibility of reduction of the use amount of platinum or displacement thereof and solution of catalyst poisoning, thus, are expected for portable electric sources to be mounted on automobiles and the like or small size stationary electric sources.

As conventional proton-conductive metal phosphates, JP-A No. 2005-294245 discloses specifically SnP₂O₇, and Electrochemical and Solid State Letters, vol. 9, p. A105 to A109 (2006) discloses specifically SnP₂O₇ using In as a dopant element.

However, since the conventional metal phosphate SnP₂O₇ has insufficient proton conductivity, it is necessary to further enhance proton conductivity. Further, SnP₂O₇ using In as a dopant element tends to be higher in proton conductivity than SnP₂O₇ using no dopant element, however, In is a rare and expensive metal like platinum and further there is a significant reduction in feeding amount thereof due to enlargement of demand for transparent electric conductive films and the like, that is, SnP₂O₇ using In as a dopant element is not satisfactory also from the standpoint of cost.

### DISCLOSURE OF THE INVENTION

The present invention has an object of providing a metal phosphate having high proton conductivity, which is useful for a fuel cell having higher output and produced at lower cost.

The present inventors have intensively studied and resultantly completed the present invention.

That is, the present invention provides the following inventions.
<1> A proton-conductive metal phosphate which is a compound containing M, P and O,
   wherein M represents at least one selected from the group consisting of group 4A and group 4B elements in the long form of the periodic table,
   a part of M is substituted with a dopant element J, and
   J represents at least one selected from the group consisting of group 3A, group 3B, group 5A and group 5B elements in the long form of the periodic table and contains an element selected from B, Al, Ga, Sc, Yb, Y, La, Ce, Sb, Bi, V, Ta and Nb.
<2> The metal phosphate according to the above-described <1>, wherein the compound containing M, P and O is substantially represented by the formula (1):

   MP₂O₇ (1).

   wherein M has the same meaning as described above.
<3> The metal phosphate according to the above-described <1> or <2>, substantially represented by the formula (2):

   M₁₋ₓJₓP₂O₇ (2)

   wherein x in the formula (2) is from not less than 0.001 to not more than 0.5, and M and J have the same meanings as described above.
<4> The metal phosphate according to any one of the above-described <1> to <3>, wherein J represents at least one selected from the group consisting of B, Al, Ga, Sc, Yb, Y, La, Ce, Sb, Bi, V, Ta and Nb.
<5> The metal phosphate according to any one of the above-described <1> to <4>, wherein J contains at least Al.
<6> The metal phosphate according to any one of the above-described <1> to <5>, wherein J represents Al.
<7> The metal phosphate according to any one of the above-described <1> to <6>, wherein M represents at least one selected from the group consisting of Sn, Ti, Pb, Zr and Hf.
<8> The metal phosphate according to any one of the above-described <1> to <7>, wherein M represents Sn.
<9> A film comprising the metal phosphate according to any one of the above-described <1> to <8>, and a binder.
<10> The film according to the above-described <9>, wherein the binder is a fluorine resin.
<11> The film according to the above-described <10>, wherein the fluorine resin is polytetrafluoroethylene.
<12> A fuel cell having as a solid electrolyte the metal phosphate according to any one of the above-described <1> to <8> or the film according to any one of the above-described <9> to <11>.

### BRIEF DESCRIPTION OF DRAWING

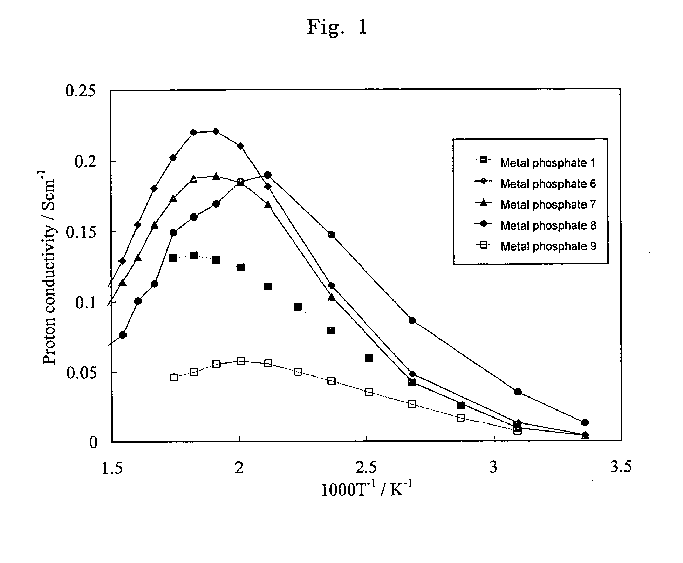

Fig. 1 shows temperature-dependency of proton conductivity of metal phosphates 1, 6, 7, 8 and 9 in the examples and comparative examples. In Fig. 1, T represents absolute temperature (K).

### MODE FOR CARRYING OUT THE INVENTION

The present invention provides a proton-conductive metal phosphate which is a compound containing M (wherein M represents at least one selected from the group consisting of group 4A and group 4B elements in the long form of the periodic table), P and O, wherein a part of M is substituted with a dopant element J (wherein, J represents at least one selected from the group consisting of group 3A, group 3B, group 5A and group 5B elements in the long form of the periodic table and at least contains an element selected from B, Al, Ga, Sc, Yb, Y, La, Ce, Sb, Bi, V, Ta and Nb). The metal phosphate of the present invention has high proton conductivity owing to the above-described constitution.

As the compound containing M (wherein, M has the same meaning as described above), P and O, mentioned are compounds such as orthophosphates, pyrophosphates and the like, and specifically, tin phosphate, titanium phosphate, silicon phosphate, germanium phosphate, zirconium phosphate and the like are mentioned. In the present invention, pyrophosphates can be preferably used among the above-described compounds, and the pyrophosphate is substantially represented by the formula (1).

MP₂O₇ (1)

The metal phosphate of the present invention is preferably represented substantially by the formula (2).

M₁₋ₓJₓP₂O₇ (2)

(wherein, x in the formula (2) is from not less than 0.001 to not more than 0.5, and M and J have the same meanings as described above.)

Substantial representation by the formula (2) means that: at the composition ratio of the formula (2), namely, at the molar ratio of M:J:P:O of (1-x):x:2:7, components P and O may be increased or decreased in slight proportion with respect to respective molar ratios of 2 and 7, in a range not disturbing the effect. Slight proportion is usually within about 10%, depending on the kind of M and J to be used. It is preferable that this proportion is smaller.

x in the formula (2) corresponds to the substitution proportion of a dopant element J, and is usually from not less than 0.001 to not more than 0.5, preferably from not less than 0.001 to not more than 0.3, more preferably from not less than 0.02 to not more than 0.3, further more preferably from not less than 0.02 to not more than 0.2, depending on the kind of M. When M represents Sn and J represents Al, x is preferably from not less than 0.01 to not more than 0.1, more preferably from not less than 0.02 to not more than 0.08, further more preferably from not less than 0.03 to not more than 0.07, for having higher proton conductivity.

In the present invention, M represents at least one selected from the group consisting of group 4A and group 4B elements in the long form of the periodic table, and at least one selected from the group consisting of Sn, Ti, Si, Ge, Pb, Zr and Hf are preferably used. M represents more preferably at least one selected from the group consisting of Sn, Ti and Zr, further more preferably Sn and/or Ti, particularly preferably Sn, from the standpoint of stability and proton conductivity of the metal phosphate.

In the present invention, J represents at least one selected from the group consisting of group 3A, group 3B, group 5A and group 5B elements in the long form of the periodic table and at least contains an element selected from B, Al, Ga, Sc, Yb, Y, La, Ce, Sb, Bi, V, Ta and Nb. J represents preferably at least one selected from the group consisting of B, Al, Ga, Sc, Yb, Y, La, Ce, Sb, Bi, V, Ta and Nb, more preferably at least one selected from B, Al, Ga, Sc, Y and Nb, further more preferably at least one selected from Al, Ga, Sc, Y and Nb, depending on the kind of M. When M contains Sn, J represents further more preferably Al and/or Ga from the standpoint of stability and proton conductivity of the metal phosphate, and particularly preferably represents Al if also the standpoint of cost is included. In any cases, it is preferable that J contains at least Al from the standpoint of cost.

The metal phosphate of the present invention can be produced, for example, as described below. It can be produced by a production method using, as a raw material, a compound containing M (wherein, M represents at least one selected from the group consisting of group 4A and group 4B elements in the long form of the periodic table), a compound containing J (wherein, J represents at least one selected from the group consisting of group 3A, group 3B, group 5A and group 5B elements in the long form of the periodic table), and a compound containing P.

The compound containing M may be selected appropriately depending on the kind of M, and oxides can be used, or those which can be decomposed and/or oxidized at high temperatures to become oxides such as hydroxides, carbonates, nitrates, halides, oxalates and the like can be used. When, for example, Sn is used as M, various tin oxides and hydrates thereof can be used, and tin dioxide or its hydrate can be preferably used.

As the compound containing P, phosphoric acid, phosphonic acid and the like are mentioned, and preferable from the standpoint of reactivity with M and J is phosphoric acid. As the phosphoric acid, usually, a concentrated phosphoric acid aqueous solution having a concentration of 50% or more is used, and preferable from the standpoint of operability is a 80 to 90% concentrated phosphoric acid aqueous solution.

The compound containing J may be selected appropriately from conventional compounds, and specifically, it is advantageous to use oxides, or those which can be decomposed and/or oxidized at high temperature to become oxides such as carbonates, oxalates and the like. When, for example, J contains Al, aluminas such as α-Al₂O₃, γ-Al₂O₃ and the like can be used. Likewise, for example, boron oxide, gallium oxide, scandium oxide, ytterbium oxide, yttrium oxide, lanthanum oxide, cerium oxide, niobium oxide and the like can be used.

Using the above-described raw materials, a metal phosphate can be produced by a method including the steps (a) and (b) in this order.
(a) reacting a compound containing M, a compound containing J and phosphoric acid, to obtain a reaction product.
(b) thermally treating the reaction product.

In the step (a), the reaction temperature is appropriately selected depending on the composition of the metal phosphate to be synthesized, and usually, temperatures in the range of 200 to 400°C are usually used. When, for example, M contains Sn, temperatures in the range of 250 to 350°C are preferably used, temperatures in the range of 270 to 330°C are more preferably used. In the reaction, it is advantageous to carry out mixing sufficiently by stirring. From the standpoint of the operability of the resultant reaction product, it is effective to add a suitable amount of water in the reaction in some cases, for maintaining the suitable viscosity of the reaction product and preventing solidification thereof. The reaction time is appropriately selected depending on the composition of the metal phosphate to be synthesized, and times as long as possible are advantageous. If productivity is taken into consideration, times in the range of 1 to 20 hours are preferable when M is Sn.

The reaction product to be obtained in the step (a) is in the form of paste, and a metal phosphate can be obtained by thermally treating this reaction product in the step (b). The thermal treatment temperature is appropriately selected depending on the composition of the metal phosphate to be synthesized, and when, for example, M is Sn, temperatures in the range of 500 to 800°C are preferable, temperatures in the range of 600 to 700°C are more preferable, temperatures in the range of 630 to 680°C are further more preferable. The thermal treatment time is appropriately selected depending on the composition of the metal phosphate to be synthesized, and when, for example, M is Sn, times in the range of 1 to 20 hours are usual, times in the range of 1 to 5 hours are preferable, times in the range of 2 to 5 hours are more preferable.

Next, a film and a fuel cell to be obtained using the metal phosphate of the present invention will be illustrated. The metal phosphate of the present invention can be used as a solid electrolyte of a fuel cell. For use of the metal phosphate of the present invention as a solid electrolyte of a fuel cell, it is necessary to form the metal phosphate into a prescribed shape, for example, a molded body or film. Since the metal phosphate of the present invention is often solidified, it is advantageous to once grind this to give a powder. This powder is molded into a prescribed shape or formed into a film, to obtain a solid electrolyte of a fuel cell.

For production of a molded body, it is advantageous to mold a powder under pressure. It is preferable to dehydrate a powder before molding under pressure. Examples of the dehydration method include a method of heating in an inert gas such as argon containing no water vapor.

Examples of a method of producing a film include a method of mixing a powder of the above-described metal phosphate and a binder and molding the mixture under pressure. Examples of the binder include conventional resins, silicon compounds (organosilicon compounds and the like), organic acidic compounds, and from the standpoint of moldability, a fluorine resin is preferably contained. The fluorine resin may be advantageously selected appropriately from conventional fluorine resins, and specific examples thereof include polytetrafluoroethylene and copolymers thereof (tetrafluoroethylene•perfluoroalkyl vinyl ether copolymer, tetrafluoroethylene•hexafluoropropylene copolymer, tetrafluoroethylene•ethylene copolymer, and the like), polyvinylidene fluoride, polychlorotrifluoroethylene, chlorotrifluoroethylene•ethylene copolymer. Of these fluorine resins, polytetrafluoroethylene and polyvinylidene fluoride can be preferably used, and polytetrafluoroethylene can be particularly preferably used.

At least one silicon compound such as organosilicon compounds may be contained as the binder. It is advantageous that the silicon compound is contained in a film by adding the silicon compound in the above-described mixing. The organosilicon compound may be advantageously selected appropriately from conventional compounds, and specific examples thereof include vinylsilanes [allkyltriethoxysilane, vinyltrimethoxysilane and the like], aminosilanes, alkylsilanes [1,8-bis(triethoxysilyl)octane, 1,8-bis(diethoxymethylsilyl)octane, n-octyltriethoxysilane], 3-(trihydroxysilyl)-1-propanesulfonic acid. Preferable among these organosilicon compounds are alkylsilanes having a plurality of silyl groups at the end such as 1,8-bis(triethoxysilyl)octane, 1,8-bis(diethoxymethylsilyl)octane. A plurality of organosilicon compounds may be used.

At least one organic acidic compound may be contained as the binder. Examples of the organic acidic compound include organic sulfonic acid compounds, organic phosphoric acid compounds.

By using the above-described molded body or film as a solid electrolyte of a fuel cell, a fuel cell can be obtained. That is, typically, a fuel cell can be obtained by using a molded body or film of the metal phosphate of the present invention as a solid electrolyte between a couple of anode and cathode. Other constitutional members of a fuel cell (for example, catalyst, fuel feeding part, air feeding part) may be used according to convnetional technologies appropriately selected.

### EXAMPLES

The present invention will be illustrated further in detail by examples.

### Example 1

### Synthesis of metal phosphate

143.2 g of SnO₂ (manufactured by Wako Pure Chemical Industries, Ltd.), 2.549 g of Al₂O₃ (α-alumina manufactured by Wako Pure Chemical Industries, Ltd.) and 322.7 g of H₃PO₄ (85% concentrated phosphoric acid aqueous solution, manufactured by Wako Pure Chemical Industries, Ltd.) were charged in a beaker, and heated at 300°C by a hot plate while stirring by a magnetic stirrer. Ion exchanged water was appropriately added for controlling viscosity during heating. A viscous paste obtained by heating for 1 hour was charged in an alumina crucible, and heated up to 650°C over a period of 1.5 hours in an electric furnace and kept for 2.5 hours, then, cooled down to room temperature over a period of 1.5 hours, to synthesize a metal phosphate 1.

### Pellet molding

The metal phosphate 1 was scraped out of the crucible, and ground in an alumina mortar. The resultant powder was filled in a mold, and mono-axially molded, then, molded by CIP (cold isostatic press) under a pressure of 2 t/cm², to obtain pellets.

### Measurement of proton conductivity

The pellet was clipped by platinum foil electrodes, and an impedance spectrum was measured under experiment conditions of
a frequency of 1 MHz to 0.1 Hz and
a voltage of 10 mV
while changing the temperature from 50°C to 300°C, using a four-terminal conductivity measuring apparatus. The values of proton conductivity obtained from this spectrum are shown in Fig. 1.

The proton conductivity at 250°C was 0.13 Scm⁻¹, and the proton conductivity at 200°C was 0.11 Scm⁻¹.

### Example 2

A metal phosphate 2 was synthesized in the same manner as in Example 1 excepting that 143.2 g of SnO₂ (manufactured by Wako Pure Chemical Industries, Ltd.), 4.686 g of Ga₂O₃ (99.99%, manufactured by Wako Pure Chemical Industries, Ltd.) and 322.7 g of H₃PO₄ (85% concentrated phosphoric acid aqueous solution, manufactured by Wako Pure Chemical Industries, Ltd.) were used as the raw materials, and pellets were produced and proton conductivity thereof was measured.

The proton conductivity at 200°C was 0.23 Scm⁻¹.

### Example 3

A metal phosphate 3 was synthesized in the same manner as in Example 1 excepting that 143.2 g of SnO₂ (manufactured by Wako Pure Chemical Industries, Ltd.), 3.448 g of Sc₂O₃ (99.9%, manufactured by Wako Pure Chemical Industries, Ltd.) and 322.7 g of H₃PO₄ (85% concentrated phosphoric acid aqueous solution, manufactured by Wako Pure Chemical Industries, Ltd.) were used as the raw materials, and pellets were produced and proton conductivity thereof was measured.

The proton conductivity at 200°C was 0.17 Scm⁻¹.

### Example 4

A metal phosphate 4 was synthesized in the same manner as in Example 1 excepting that 7.159 g of SnO₂ (manufactured by Wako Pure Chemical Industries, Ltd.), 0.497 g of Yb₂O₃ (manufactured by Wako Pure Chemical Industries, Ltd.) and 16.141 g of H₃PO₄ (85% concentrated phosphoric acid aqueous solution, manufactured by Wako Pure Chemical Industries, Ltd.) were used as the raw materials and further, 80 g of ion exchanged water was charged in the beaker, and pellets were produced and proton conductivity thereof was measured.

The proton conductivity at 200°C was 0.21 Scm⁻¹.

### Example 5

A metal phosphate 5 was synthesized in the same manner as in Example 1 excepting that 7.159 g of SnO₂ (manufactured by Wako Pure Chemical Industries, Ltd.), 0.282 g of Y₂O₃ (manufactured by Wako Pure Chemical Industries, Ltd.) and 16.141 g of H₃PO₄ (85% concentrated phosphoric acid aqueous solution, manufactured by Wako Pure Chemical Industries, Ltd.) were used as the raw materials and further, 80 g of ion exchanged water was charged in the beaker, and pellets were produced and proton conductivity thereof was measured.

The proton conductivity at 200°C was 0.13 Scm⁻¹.

### Example 6

A metal phosphate 6 was synthesized in the same manner as in Example 1 excepting that 5.27 g of SnO₂ (manufactured by Wako Pure Chemical Industries, Ltd.), 1.99 g of Nb₂O₅ (manufactured by Wako Pure Chemical Industries, Ltd.) and 15.56 g of H₃PO₄ (85% concentrated phosphoric acid aqueous solution, manufactured by Wako Pure Chemical Industries, Ltd.) were used as the raw materials, further, 80 g of ion exchanged water was charged in the beaker and an alumina square sheath was used instead of the alumina crucible, and pellets were produced and proton conductivity thereof was measured.

The proton conductivity at 200°C was 0.18 Scm⁻¹, and the proton conductivity at 250°C was 0.22 Scm⁻¹.

### Example 7

A metal phosphate 7 was synthesized in the same manner as in Example 6 excepting that 6.78 g of SnO₂ (manufactured by Wako Pure Chemical Industries, Ltd.) and 0.66 g of Nb₂O₅ (manufactured by Wako Pure Chemical Industries, Ltd.) were used as the raw materials, and pellets were produced and proton conductivity thereof was measured.

The proton conductivity at 200°C was 0.17 Scm⁻¹, and the proton conductivity at 250°C was 0.19 Scm⁻¹.

### Example 8

A metal phosphate 8 was synthesized in the same manner as in Example 6 excepting that 3.76 g of SnO₂ (manufactured by Wako Pure Chemical Industries, Ltd.) and 3.32 g of Nb₂O₅ (manufactured by Wako Pure Chemical Industries, Ltd.) were used as the raw materials, and pellets were produced and proton conductivity thereof was measured.

The proton conductivity at 200°C was 0.19 Scm⁻¹, and the proton conductivity at 250°C was 0.17 Scm⁻¹.

### Example 9

A powder of the metal phosphate 1 synthesized in Example 1 was ground in a mortar, and a small amount of a mixture of 1,8-bistriethoxysilyloctane and 3-trihydroxysilyl-1-propanesulfonic acid 30-35% aqueous solution was added. Further, a small amount of a powder of polytetrafluoroethylene was added and kneaded thoroughly using a mortar until it became an agglomerate, and this was vacuum-packed and drawn using a roller, thereby a film can be obtained. The resultant film shows a nature of conducting protons.

### Comparative Example 1

A metal phosphate 9 was synthesized in the same manner as in Example 1 excepting that 150.7 g of SnO₂ (manufactured by Wako Pure Chemical Industries, Ltd.) and 322.7 g of H₃PO₄ (85% concentrated phosphoric acid aqueous solution, manufactured by Wako Pure Chemical Industries, Ltd.) were used as the raw materials, and pellets were produced and proton conductivity thereof was measured.

The proton conductivity at 200°C was 0.056 Scm⁻¹. The results are shown in Fig. 1.

### INDUSTRIAL APPLICABILITY

The metal phosphate of the present invention has high proton conductivity, is suitably used as a solid electrolyte for fuel cells, and particularly suitably used for a portable electric source to be mounted on an automobile and the like or for a small size stationary electric source, and a metal phosphate showing high proton conductivity can be produced at lower cost.

## Claims

1. A proton-conductive metal phosphate which is a compound containing M, P and O,
wherein M represents at least one selected from the group consisting of group 4A and group 4B elements in the long form of the periodic table,
a part of M is substituted with a dopant element J
J represents at least one selected from the group consisting of group 3A, group 3B, group 5A and group 5B elements in the long form of the periodic table and at least contains an element selected from B, Al, Ga, Sc, Yb, Y, La, Ce, Sb, Bi, V, Ta and Nb.

2. The metal phosphate according to Claim 1, wherein the compound containing M, P and O is substantially represented by the formula (1):
MP₂O₇ (1).
wherein M has the same meaning as described above.

3. The metal phosphate according to Claim 1 or 2, substantially represented by the formula (2):
M₁₋ₓJₓP₂O₇ (2)
wherein x in the formula (2) is from not less than 0.001 to not more than 0.5, and M and J have the same meanings as described above.

4. The metal phosphate according to any one of Claims 1 to 3, wherein J represents at least one selected from the group consisting of B, Al, Ga, Sc, Yb, Y, La, Ce, Sb, Bi, V, Ta and Nb.

5. The metal phosphate according to any one of Claims 1 to 4, wherein J contains at least Al.

6. The metal phosphate according to any one of Claims 1 to 5, wherein J represents Al.

7. The metal phosphate according to any one of Claims 1 to 6, wherein M represents at least one selected from the group consisting of Sn, Ti, Si, Ge, Pb, Zr and Hf.

8. The metal phosphate according to any one of Claims 1 to 7, wherein M represents Sn.

9. A film comprising the metal phosphate according to any one of Claims 1 to 8, and a binder.

10. The film according to Claim 9, wherein the binder is a fluorine resin.

11. The film according to Claim 10, wherein the fluorine resin is polytetrafluoroethylene.

12. A fuel cell having as a solid electrolyte the metal phosphate according to any one of Claims 1 to 8, or the film according to any one of Claims 9 to 11.
